# EUROPEAN PATENT APPLICATION

(11) **EP 4 765 212 A1**
(43) Date of publication of application: **24.06.2026**
(21) Application number: 25221949.8
(22) Date of filing: 09.12.2025
(51) Int. Cl.: H01M 4/04, H01M 4/139

(54) **ELECTRODE MANUFACTURING APPARATUS FOR SECONDARY BATTERY AND METHOD FOR MANUFACTURING ELECTRODE USING THE SAME**

(30) Priority: 19.12.2024 KR 20240191645
(71) Applicant: SAMSUNG SDI CO., LTD., Yongin-si, Gyeonggi-do 17084 (KR)
(72) Inventor: KIM, Yongsoo, 17084 Yongin-si (KR); KIM, Yongin, 17084 Yongin-si (KR); HONG, Chan, 17084 Yongin-si (KR); KIM, Hyunchul, 17084 Yongin-si (KR); AN, Eunjin, 17084 Yongin-si (KR); KIM, Sanggi, 17084 Yongin-si (KR); KWAK, Jun Hyeok, 17084 Yongin-si (KR)
(74) Representative: Marks & Clerk LLP

(57) **Abstract**

An electrode manufacturing apparatus for a secondary battery includes a conveying part configured to convey an electrode plate, the electrode plate including a current collector coated with an electrode active material, a rolling part along the conveying part, the rolling part being configured to roll the electrode plate, and a roller part above the conveying part, the roller part including a roller base and an adhesive film covering a portion of the roller base, and the roller part being configured to roll a non-coated part of the current collector.

## Description

### 1. Field

The present disclosure relates to an electrode manufacturing apparatus for a secondary battery and a method for manufacturing an electrode for a secondary battery using the same.

### 2. Description of Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

According to some embodiments of the present disclosure, an electrode manufacturing apparatus for a secondary battery may include a conveying part configured to convey an electrode plate of a secondary battery including a current collector coated with an electrode active material, a rolling part disposed along the conveying part and configured to roll the electrode plate, and a roller part configured to roll a non-coated part of the current collector where the electrode active material may be not coated, the roller part may include a roller base and an adhesive film that covers a portion of the roller base.

In other words, according to some embodiments of the present disclosure an electrode manufacturing apparatus for a secondary battery may comprise: a conveying part configured to convey an electrode plate, the electrode plate including a current collector coated with an electrode active material; a rolling part along the conveying part, the rolling part being configured to roll the electrode plate; and a roller part above the conveying part, the roller part including a roller base and an adhesive film covering a portion of the roller base, and the roller part being configured to roll a non-coated part of the current collector.

In some embodiments, a width of the adhesive film may correspond to a width of the non-coated part.

In some embodiments, a thickness of the adhesive film may range from 300µm to 600µm (or may be between 300µm and 600µm).

In some embodiments, the roller part may include a step formed by placing the adhesive film on a surface of the roller base.

In some embodiments the roller part may include a step difference between the adhesive film and a surface of the roller base.

In some embodiments, a location of the adhesive film may correspond to a location of the non-coated part. In some embodiments, the non-coated part may be placed on both ends of the current collector (or may be on opposite ends of the current collector), the adhesive film may include a first adhesive film and a second adhesive film (on opposite ends of the roller base, respectively,), and a separation distance between the first adhesive film and the second adhesive film corresponds to a width of an electrode active material layer formed by coating the electrode active material on the current collector.

In some embodiments, the non-coated part may be detached from the adhesive film and elongated in a process of passing through the roller part.

In some embodiments, the roller base may be configured to control a tension transmitted from the conveying part.

In some embodiments, the rolling part may include a pair of rolling rollers, the electrode passes through a rolling gap formed between the rolling rollers and simultaneously pressurizes the current collector and an electrode active material layer formed by coating the electrode active material on the current collector.

In some embodiments, the rolling part may include a pair of rolling rollers with a rolling gap therebetween, the pair of rolling rollers being configured to press the electrode active material and the current collector passing through the rolling gap.

In some embodiments, the roller part may be positioned ahead of the rolling part with respect to a conveying direction of the electrode plate (or with respect to a conveying direction of the conveying part).

In some embodiments, the roller part and the rolling part may be placed to be spaced apart from each other (or spaced apart from each other along the conveying part).

According to some embodiments of the present disclosure, an electrode manufacturing method for a secondary battery, the method may include a conveying part conveying an electrode plate of a secondary battery (the electrode plate) including a current collector where an electrode active material may be coated (or coated with an electrode active material), a roller part elongating a non-coated part of the current collector where the electrode active material may be not be coated, and a rolling part rolling the (conveyed) electrode plate, the roller part may include a roller base and an adhesive film that covers a portion of the roller base.

In some embodiments, the elongating of the non-coated part of the current collector may include corresponding a location of the adhesive film to a location of the non-coated part.

In some embodiments, the elongating of the non-coated part of the current collector may include detaching the non-coated part from the adhesive film.

In some embodiments, the detaching the non-coated part from the adhesive film may include elongating the non-coated part detached from the adhesive film in a process of passing through the roller part.

In some embodiments, the elongating of the non-coated part of the current collector may be performed before the rolling of the electrode plate.

In some embodiments, a width of the adhesive film may correspond to a width of the non-coated part.

In some embodiments, a thickness of the adhesive film may range from 300µm to 600µm.

In some embodiments, the non-coated part may be placed on both ends of the current collector, the adhesive film may include a first adhesive film and a second adhesive film, and a separation distance between the first adhesive film and the second adhesive film corresponds to a width of an electrode active material layer formed by coating the electrode active material on the current collector.

In some embodiments, rolling the electrode plate may include controlling a tension transmitted from the conveying part (via the roller base).

In some embodiments, the rolling part may include a pair of rolling rollers, the rolling of the electrode plate may include electrode plate passing through a rolling gap formed between the rolling rollers and simultaneously pressurizing an electrode active material layer where the electrode active material may be coated on the current collector.

Optional features discussed above in relation to one embodiment may, where appropriate, be applied to another embodiment.

However, aspects and features of the present disclosure are not limited to those described above, and other aspects and features not mentioned will be clearly understood by a person skilled in the art from the detailed description, described below.

At least some of the above and other features of the invention are set out in the claims.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is an outline view illustrating an electrode manufacturing apparatus for a secondary battery according to some embodiments of the present disclosure;
FIG. 2 is a perspective view illustrating a roller part and an electrode place at the periphery of the roller part according to some embodiments of the present disclosure;
FIG. 3 is a cross-sectional view illustrating a roller part and an electrode plate at the periphery of the roller part according to some embodiments of the present disclosure;
FIG. 4 is a view illustrating a process of elongating a non-coated part of a current collector by contacting a roller part with an electrode plate according to some embodiments of the present disclosure;
FIG. 5 is a view illustrating a process of elongating a non-coated part of a current collector by contacting a roller part with an electrode plate according to some embodiments of the present disclosure;
FIG. 6 is a view illustrating a process of elongating a non-coated part of a current collector by contacting a roller part with an electrode plate according to some embodiments of the present disclosure;
FIG. 7 is a view illustrating a process of elongating a non-coated part of a current collector by contacting a roller part with an electrode plate according to some embodiments of the present disclosure;
FIG. 8 is an outline view illustrating a rolling process using a rolling part that rolls an electrode plate in an electrode manufacturing apparatus for a secondary battery according to some embodiments of the present disclosure;
FIG. 9 is a view illustrating a camber effect that occurs during a manufacturing process of an electrode for a secondary battery according to some embodiments of the present disclosure;
FIG. 10 is a view illustrating an electrode manufactured by using an electrode manufacturing apparatus for a secondary battery according to some embodiments of the present disclosure;
FIG. 11 is an outline view illustrating an electrode manufacturing apparatus for a secondary battery according to some embodiments of the present disclosure; and
FIG. 12 is a flowchart illustrating an example of an electrode manufacturing method for a secondary battery according to some embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (or under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

According to some embodiments of the present disclosure, the sizes of layers and areas are illustrated in the drawings may be exaggerated for clarity of explanation. The sizes in the drawings are only for ease of explanation, but the present disclosure is not limited thereto. Like reference numerals in the drawings denote like elements throughout the specification.

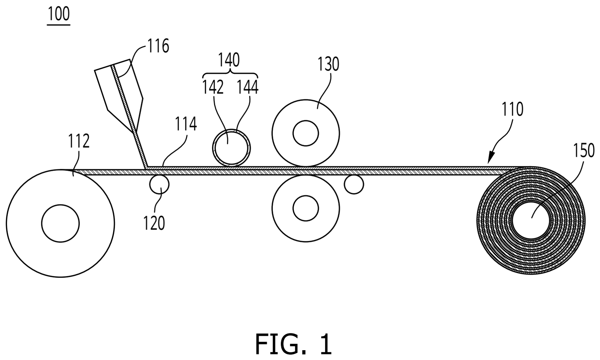

FIG. 1 is an outline view illustrating an electrode manufacturing apparatus for a secondary battery according to some embodiments of the present disclosure.

Referring to FIG. 1, an electrode manufacturing apparatus 100 for a secondary battery according to some embodiments of the present disclosure may include a conveying part 120 (e.g., a conveyer) for conveying an electrode plate 110 of a secondary battery, a rolling part 130 (e.g., a rolling roller) arranged along the conveying part 120 for rolling the electrode plate 110, and a roller part 140 (e.g., an elongating roller) for elongating a non-coated part of a current collector 112 on which an electrode active material 116 is not applied on the electrode plate 110.

The electrode plate 110 of the secondary battery may include the current collector 112 to which the electrode active material 116 is applied. According to some embodiments, the electrode plate 110 may include an electrode active material layer 114 formed by applying the electrode active material 116 on the current collector 112. Specifically, the electrode plate 110 may include the electrode active material layer 114 formed by applying a slurry (or an electrode mixture) having fluidity by mixing the electrode active material 116 with other additives such as a conductive material and a filler, a binder for inter-powder bonding and adhesion to a current collector, and a solvent for adding viscosity and dispersing powder on the current collector 112.

The slurry may be an amorphous mixture in the form of a powder or a lump of powder combined, and the mixture may be formed using various methods without limitation as long as the mixture includes an electrode active material 116, a conductive material, and a binder through wet or dry mixing.

The composition of the electrode active material layer 114 may vary depending on the types of electrodes to be manufactured. For example, when an electrode to be manufactured is a positive electrode, the electrode active material 116 may be a positive electrode active material, and when the electrode to be manufactured is a negative electrode, the electrode active material 116 may be a negative electrode active material.

The positive electrode may include the current collector 112 and a positive electrode active material layer formed on the current collector 112. The positive electrode active material layer may include a positive electrode active material and further include a binder and/or a conductive material. The current collector 112 may be made of aluminum (Al).

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiₐA_{1-b}X_{b}O_{2-c}D_{c} (0.90≤a≤1.8, 0≤b≤0.5, and 0≤c≤0.05); LiₐMn_{2-b}X₈O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The negative electrode may include the current collector 112 and a negative electrode active material layer disposed on the current collector 112. The negative electrode active material layer may include a negative electrode active material, and further include a binder and/or a conductive material.

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder may include a non-aqueous binder, an aqueous binder, a dry binder, or a combination thereof. When an aqueous binder is used as the negative electrode binder, a cellulose-based compound capable of imparting viscosity may be further included

The negative current collector may include a copper foil, a nickel foil, a stainless steel foil, a titanium foil, a nickel foam, a copper foam, a polymer substrate coated with a conductive metal, or a combination thereof.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The material capable of doping/dedoping lithium may be a Si-based negative electrode active material or a Sn-based negative electrode active material. The Si-based negative electrode active material may include silicon, a silicon-carbon composite, SiOx (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnO₂, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The current collector 112 may include any suitable material as long as it has high conductivity without causing chemical changes. For example, the current collector 112 may include copper, aluminum, stainless steel, nickel, titanium, calcined carbon, or a combination thereof. The current collector 112 may be formed in the form of a metal foil or a thin metal plate such as copper, a copper alloy, nickel, or a nickel alloy. According to another embodiment, the current collector 112 may be formed in the form of a metal foil or a thin metal plate such as aluminum or an aluminum alloy.

For example, the electrode plate 110 of the secondary battery may include the current collector made of a thin metal plate and the electrode active material layer 114 on which an active material is coated on both surfaces or one surface of the current collector 112. The electrode plate 110 may include a coating part including the electrode active material layer 114, and a non-coated part where the current collector 112 (or a substrate) is exposed without the electrode active material layer 114. As an example, the electrode plate 110 may be formed as a positive electrode of a secondary battery by coating a positive electrode active material on an aluminum (Al) substrate. As another example, the electrode plate 110 may be formed as a negative electrode of a secondary battery by coating a negative electrode active material on a copper (Cu) substrate.

The conveying part 120 may indicate an entire system capable of reliably conveying the electrode plate 110, e.g., the conveying part 120 may include a transfer path (e.g., a movement path) of the electrode plate 110 extending between an unwinding roller of the electrode plate 110 and a rewinding roller 150 that winds the electrode plate 110 after processing. For example, in FIG. 1, the conveying direction of the electrode plate 110 may be from a left side to a right side. The current collector 112 may pass through the rolling part 130 while moving along the conveying direction by the conveying part 120 to be manufactured as the electrode plate 110.

The conveying part 120 may include a plurality of conveying rollers that convey the electrode plate 110, a conveying conveyor belt, a motor system and a controller that control the speed of the conveying conveyor belt, and a guide roller that prevents the electrode plate 110 from bending or warping during the conveying, a sensor system that detects the location of the electrode plate 110 in real time, and a vacuum suction system that fixes and conveys an electrode plate. The conveying part 120 according to some embodiments may further include a center position control (CPC) that aligns the relative location of the electrode plate 110 supplied to the roller part 140 or the rolling part 130.

The conveying part 120 according to some embodiments may further include a skew detection sensor that measures the skew degree of the electrode plate 110. The skew detection sensor may be configured in a way that improves the quality of the secondary battery production process by measuring the skew degree of the electrode plate 110 without limitation. For example, the skew detection sensor may include an optical sensor including a camera system or a photosensor, an ultrasonic sensor using an ultrasonic signal, a laser sensor including a laser rangefinder, a magnetic sensor, or a combination thereof.

The electrode manufacturing apparatus 100 for a secondary battery according to some embodiments may further include the rewinding roller 150 that winds the electrode plate 110.

The conveying speed of the electrode plate 110 of the conveying part 120 may be linked to the rotational speed of the rewinding roller 150. For example, the speed of winding the electrode plate 110 of the rewinding roller 150 and the speed at which the conveyor belt of the conveying part 120 moves the electrode plate 110 by a friction between the surface of the conveyor belt and the electrode plate 110 may be the same, so that a tension may not be applied to the electrode plate 110.

The electrode manufacturing apparatus 100 for the secondary battery may further include a half-slitting part that cuts the electrode plate 110 along the conveying direction of the electrode plate 110. For example, the half slitting part may include a cutting roller that cuts the electrode plate 110 to be parallel to the conveying direction of the electrode plate 110, a pressure roller for stably fixing the electrode plate with the cutting roller to apply a pressure, a guide that guides the electrode plate 110 to direct between the cutting roller and the pressure roller, and a motor for driving the cutting roller and the pressure roller.

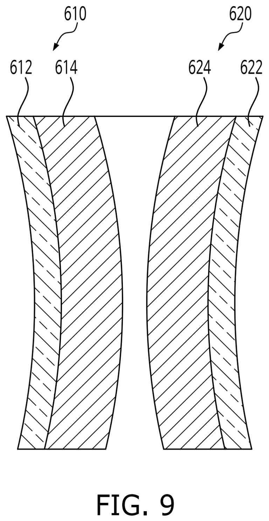

The half-slitting part may be positioned behind the rolling part 130 that rolls the electrode plate 110 (e.g., the half-slitting part may be positioned between the rolling part 130 and the rewinding roller 150). Therefore, the electrode plate 110 that passes through the rolling part 130 may be cut in the conveying direction of the electrode plate 110 to be divided into a first electrode plate and a second electrode plate. The width of the first electrode and the width of the second electrode plate may be the same. The description thereof will be made with reference to FIG. 9.

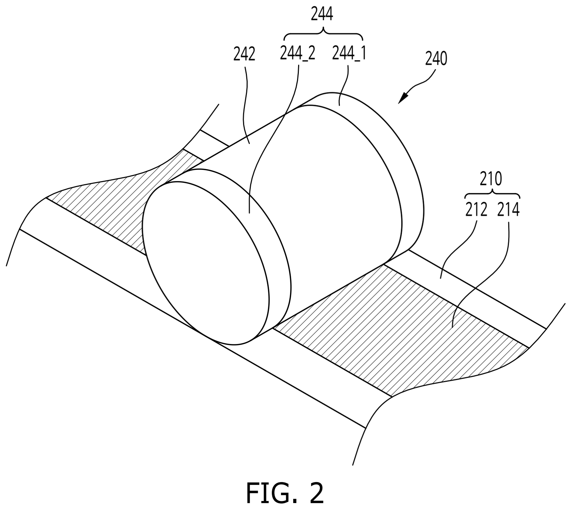

The roller part 140 may be positioned above the transfer path of the conveying part 120 (e.g., above a surface of a conveyor belt supporting the electrode plate 110), and include an adhesive film 144 that covers at least a portion of a roller base 142. For example, the roller part 140 may include the roller base 142 disposed on at least one side surface of the electrode plate 110, and a part of the roller base 142 may be covered by the adhesive film 144. The detailed shape of the roller part 140 will be described with reference to FIG. 2 to FIG. 3.

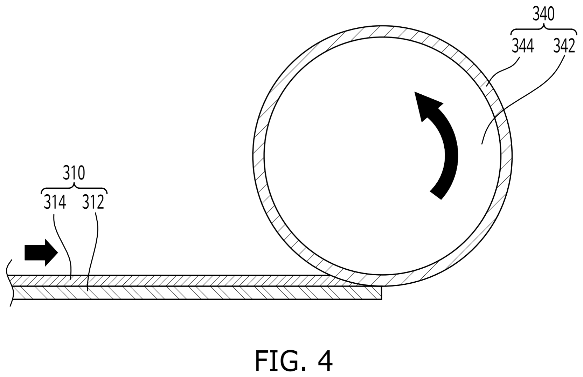

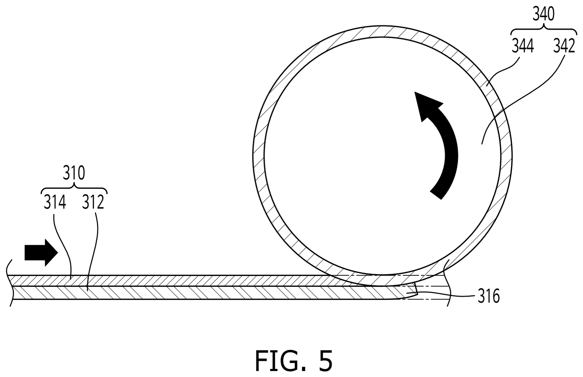

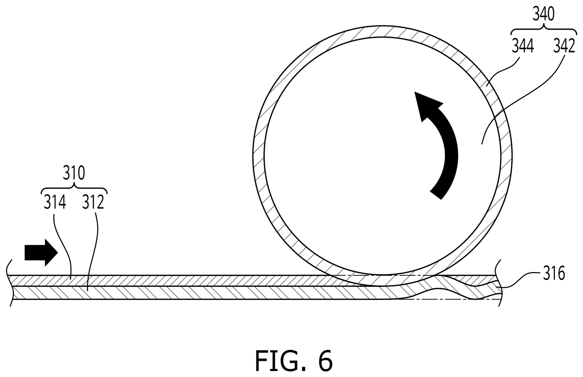

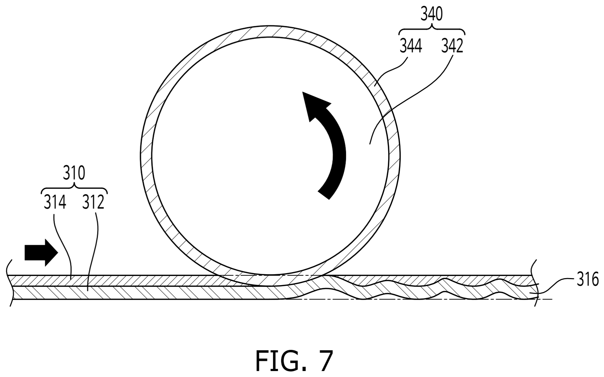

The adhesive film 144 may contact a non-coated part of the current collector 112 (i.e., a part of the current collector 112 without the electrode active material layer 114). The non-coated part of the current collector 112 may be elongated through attachment to or detachment from the adhesive film 144 while passing the roller part 140. The detailed description thereof will be made with reference to FIG. 4 to FIG. 7.

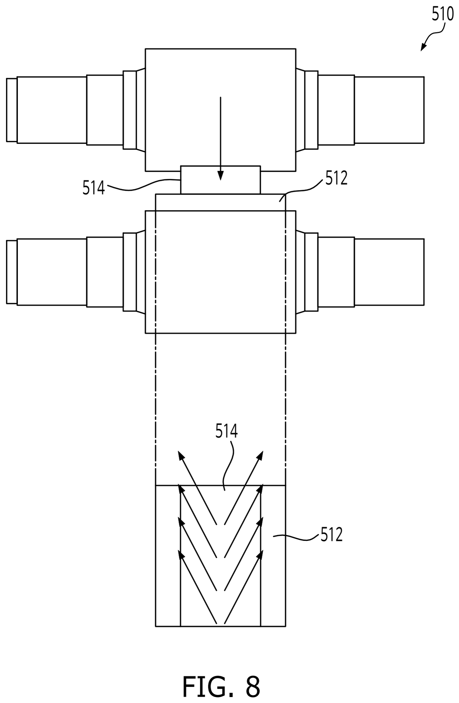

The rolling part 130 may include a pair of rolling rollers along the transfer path of the conveying part 120 (e.g., on opposite surfaces of a conveyor belt). The pair of rolling rollers may simultaneously apply pressure to the electrode active material layer 114 and the current collector 112 formed when the electrode plate 110 passes through a rolling gap formed between the rolling rollers, and the electrode active material 116 is coated on the current collector 112. The description thereof will be detailed with reference to FIG. 8.

The roller part 140 and the rolling part 130 may be placed to be spaced apart from each other along the transfer path of the conveying part 120. For example, with respect to the conveying direction of the electrode plate 110, the roller part 140 may be placed ahead of the rolling part 130. For example, referring to FIG. 1, the rolling part 130 may be between the roller part 140 and the rewinding roller 150, so the electrode plate 110 may pass the roller part 140 before passing the rolling part 130. Therefore, the electrode plate 110 where the non-coated part of the current collector 112 is rolled may be provided to the rolling part 130 through the roller part 140 and rolled by passing through the rolling part 130.

For example, the secondary battery electrode manufactured by the electrode manufacturing apparatus 100 for a secondary battery may be a lithium battery cell, a sodium battery cell, etc. In another example, the secondary battery may include all types of batteries that repeatedly provide electricity by charging and discharging. According to some embodiments, when the secondary battery is a lithium battery cell, the secondary battery may be used in an electric vehicle (EV) because of having an excellent life characteristic and a high-rate characteristic. For example, the secondary battery may be used in a hybrid vehicle such as a plug-in hybrid electric vehicle (PHEV). In addition, the lithium battery cell may be used in fields that require a variety of ranges of power storages, e.g., in smart phones, tablet PCs, electric bicycles, power tools, etc.

The electrode manufacturing apparatus 100 for the secondary battery may minimize the skew caused by the difference in stresses in the rolling process for manufacturing an electrode and reduces the defect rate of cells in an electrode winding process or stack process.

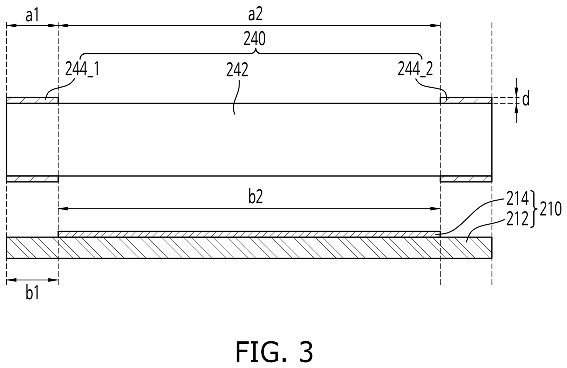

FIG. 2 is a perspective view illustrating a roller part and an electrode plate at the periphery of the roller part. In addition, FIG. 3 is a view illustrating cross-sections of a roller part and an electrode plate at the periphery of the roller part according to some embodiments of the present disclosure.

Referring to FIG. 2 and FIG. 3, a roller part 240 may include a roller base 242 and an adhesive film 244 that covers a part of the roller base 242. For example, referring to FIG. 2, the adhesive film 244 may be on (e.g., only on) opposite edges of the roller base 242, such that a center part of the roller base 242 may not be covered by the adhesive film 244. For example, the roller part 240 may include the roller base 242 placed on at least one side surface of an electrode plate 210, and a part of the roller base 242 (e.g., a peripheral pat of the roller base 242) may be covered by the adhesive film 244. For example, the roller part 240 may be the roller part 140 in FIG. 1.

The adhesive film 244 may be placed to be parallel to the rotational direction of the roller base 242 with a width a1 being constant. According to some embodiments, the width a1 of the adhesive film 244 may correspond to a width b1 of the non-coated part of the electrode plate 210. According to another embodiment, the width a1 of the adhesive film 244 may be equal to or greater than the width b1 of the non-coated part of the electrode plate 210, but in this case, the adhesive film 244 may not contact the electrode active material layer 214. The position of the adhesive film 244 may correspond to (e.g., overlap) that of the non-coated part.

The adhesive film 244 may contact a non-coated part without the electrode active material layer 214 on the current collector 212 of the electrode plate 210, and the portion without the adhesive film 244 on the roller base 242 may contact the electrode active material layer 214 of the electrode plate 210.

For example, as illustrated in FIGS. 2 and 3, the adhesive film 244 may include a first adhesive film 244_1 and a second adhesive film 244_2, and the first adhesive film 244_1 and the second adhesive film 244_2 may be disposed at both ends (e.g., opposite ends) of the roller base 242. A separation distance a2 between the first adhesive film 244_1 and the second adhesive film 244_2 may correspond to a width b2 of the electrode active material layer 214 of the electrode plate 210 formed by applying an electrode active material on the current collector 212. In this case, the non-coated part of the electrode plate 210 may be positioned at both ends of the current collector 212.

The adhesive film 244 may be formed of a material having a high friction. When the adhesive film 244 rotates while contacting the non-coated part of the electrode plate 210, the non-coated part may be elongated by friction. Through the rotation of the roller base 242, the adhesive film 244 may apply tension to the non-coated part to form wrinkles on the non-coated part.

In another example, depending on the design, the electrode plate 210 may include at least one or more non-coated parts at portions other than the ends. In this case, the roller part 240 may include the adhesive film 244 placed to correspond to the position of the non-coated part, so that the electrode plate 210 may be detached from the adhesive film 244 as the roller part 240 rotates, only the non-coated part of the electrode plate 210 may be elongated.

Therefore, the roller part 240 in an electrode manufacturing apparatus for a secondary battery may further roll the non-coated part without the electrode active material layer 214 before the electrode plate 210 is rolled through the rolling part, thereby minimizing the difference in elongation rates between the coated part of the electrode mixture rolled by the rolling part and the non-coated part. As a result, the occurrence of defects such as waves, wrinkles, or folding of the non-coated port due to the differences in elongation in the manufactured electrode may be prevented.

According to some embodiments of the present disclosure, the roller part 240 may include the adhesive film 244 placed on the surface of the roller base 242 with a step formed by a thickness (d) of the adhesive film 244 (e.g., a step difference between the adhesive film 244 and the surface of the roller base 242 due to a thickness difference). According to some embodiments, the thickness (d) of the adhesive film 244 may range from 300 µm to 600 µm, e.g., 400 µm to 500 µm. When the thickness (d) of the adhesive film is too small, the elongation effect may be insufficient, and when the thickness (d) of the adhesive film is too great, the non-coated part of the electrode plate 210 may be broken or excessively deformed.

A lifting rock may be connected to the roller base 242 so that the roller part 240 may control the degree of applying the non-coated part when the adhesive film 244 of the roller part 240 contacts the non-coated part. The roller part 240 may displace the roller base 242 with respect to the electrode plate 210 by the lifting rock connected to the roller base 242.

FIG. 4 to FIG. 7 are views illustrating a process of elongating a non-coated part of a current collector by contact between a roller part and an electrode plate.

Referring to FIG. 4 to FIG. 7, an electrode plate 310 may pass through a roller part 340 while in contact with an adhesive film 344, and during this process, a current collector 312 including a non-coated part 316 may be elongated by an adhesive force. For example, the roller part 340 may be the roller part 140 in FIG. 1

The current collector 312 including the non-coated part 316 may be attached to (e.g., may be in contact with) the adhesive film 344 while passing through the roller part 340. The current collector 312 attached to the adhesive film 344 may be elongated according to the rotation of the roller base 342. On the contrary, the current collector 312 without the adhesive film 344, i.e. the current collector 312 coated with an electrode active material layer 314, may be conveyed by the move of the conveying part regardless of the rotation of the roller base 342. Therefore, only the non-coated part 316 may be elongated. The current collector 312 attached to the adhesive film 344 may be detached when the roller part 340 moves with respect to the electrode plate 310, and form wrinkles as a result of elongation.

Through the above-described process, the non-coated part 316 may be elongated by being attached to or detached from the adhesive film 344 without physically compressing the electrode plate 310 to naturally form wrinkles. According to some embodiments, damage to the current collector or the electrode active material layer may be minimized in the electrode manufacturing apparatus for a secondary battery and reduce the difference in the elongation rate of the non-coated part.

FIG. 8 is an outline view illustrating a rolling process using a rolling part that rolls an electrode plate in an electrode manufacturing apparatus for a secondary battery.

Referring to FIG. 8, a rolling part 510 may include a pair of rolling rollers, and an electrode may pass through a rolling gap formed between the rolling rollers and simultaneously pressurize (e.g., press) an electrode active material layer 514 and a current collector 512. The electrode active material layer 514 may be formed by coating an electrode active material on the current collector 512. The non-coated part of the electrode plate that passes through the rolling part 510 may be elongated by a roller part. For example, the rolling part 510 may be the rolling part 130 in FIG. 1

The rolling part 510 for performing a rolling process may pressurize (e.g., press) the electrode plate including the current collector 512 and the electrode active material layer 514 to allow the electrode plate to have a uniform thickness. The rolling part 510 may perform a roll pressing process that passes the electrode plate between a plurality of rolling rollers to manufacture an electrode plate with a uniform thickness. The rolling roller may be heated at a temperature ranging from 60°C to 220°C.

The rolling part 510 may pressurize the electrode plate including the current collector 512 and the electrode active material layer 514 to allow the binder included in the electrode active material layer 514 to be bonded to the current collector 512.

The rolling part 510 in the rolling process may apply a strong pressure by using a rolling roller, etc. to bond the electrode active material layer 514 with the current collector 512. In this process, a difference in stress may occur between a coated part including both the electrode active material layer 514 and the current collector 512 and a non-coated part without the electrode active material layer 514. The thickness of the coated part including both the electrode active material layer 514 and the current collector 512 may be greater than that of the non-coated part to receive a stronger pressure compared to the non-coated part, so that the coated part with the electrode active material layer 514 may be strongly elongated compared to the non-coated part.

FIG. 9 is a view illustrating a camber effect that occurs during a process of manufacturing an electrode for a secondary battery.

The difference in degrees of elongation formed during the rolling process may cause the camber effect where the electrode plate cut along the conveying direction becomes skewed during a half-slitting process, which cuts the electrode plate in half in a slitting process.

Referring to FIG. 9, an electrode plate may be cut to be parallel to the conveying direction of the electrode plate after the half-slitting process is performed by a half-slitting part of an electrode manufacturing apparatus of a secondary battery. One electrode plate may be divided into a first electrode plate 610 and a second electrode plate 620.

The first electrode plate 610 may include a first current collector 612 and a first active material layer 614, and the second electrode plate 620 may include a second current collector 622 and a second active material layer 624. The first current collector 612 and the second current collector 622 may originate from the same configuration with the same components. Similarly, the first active material layer 614 and the second active material layer 624 may originate from the same configuration with the same components.

According to a comparative structure, as shown in FIG. 9, the first electrode plate 610 and the second electrode plate 620 may be skewed in opposite directions. Specifically, stronger elongation may occur in the coated part including both the active material layers 614 and 624, and the current collectors 612 and 622 in the rolling process, so that the skew phenomenon may occur in a shape with the coated part longer than the non-coated part. For example, in FIG. 9, the first electrode plate 610 with the coated part on the right may be skewed to the left, and the second electrode plate 620 with the coated part on the left may be skewed to the right.

However, according to example embodiments, when the rolling process is performed in a state where a roller part elongates the non-coated part of the electrode plate, the occurrence of skew phenomenon may be suppressed.

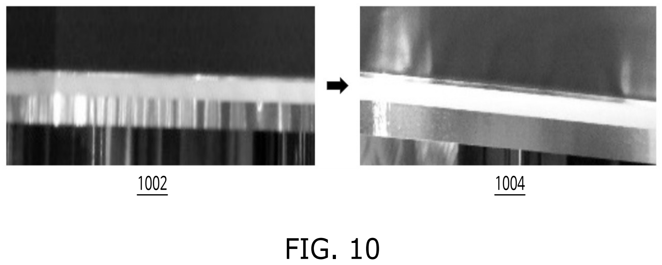

FIG. 10 is a view illustrating an electrode manufactured by an electrode manufacturing apparatus for a secondary battery according to some embodiments.

Referring to FIG. 10, before entering the rolling part (e.g., the rolling part 130 in FIG. 1) after passing the roller part (e.g., the roller part 140 in FIG. 1), the non-coated part of the current collector of the electrode plate 1002 may be elongated and a wave pattern may be formed on the side of non-coated part. In an electrode plate 1004 that passes through the rolling part (e.g., the rolling part 130 in FIG. 1), the coated part including both the electrode active material layer and the current collector may be elongated more strongly to reduce the difference in elongation between the coated part and the non-coated part. Therefore, the wave pattern may be removed, and the occurrence of the skew may be compressed.

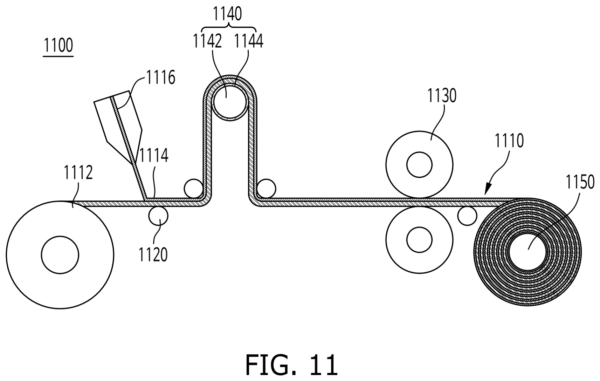

FIG. 11 is an output line view illustrating an electrode manufacturing apparatus for a secondary battery according to some embodiments of the present disclosure.

Referring to FIG. 11, an electrode manufacturing apparatus 1100 according to some embodiments may include a conveying part 1120 that conveys an electrode plate 1110 of the secondary battery, a rolling part 1130 disposed along the conveying part 1120 to roll the electrode plate 1110, and a roller part 1140 for elongating the non-coated part of a current collector 1112 where an electrode active material 1116 is not applied on the electrode plate 1110. The roller part 1140 may include a roller base 1142 and an adhesive film 1144 that covers at least part of the roller base 1142.

The roller part 1140 and the rolling part 1130 may be placed to be spaced apart from each other. For example, the roller part 1140 may be placed ahead of (e.g., before) the rolling part 130 with respect to the conveying direction of the electrode plate 1110 (direction from left to right in FIG. 11). In addition, the roller part 1140 may be placed to apply a tension to the electrode plate 1110 disposed between a roller for providing the current collector 1112 and a rewinder 1150. The roller base 1142 may be configured to control the tension transmitted from the conveying part 1120. By adding a tension to the electrode plate 1110 through the roller base 1142, folding of the current collector 1112, e.g., a defect caused by the folding of the relatively thin non-coated area without the electrode active material layer 1114, may be prevented. The description of other components is the same as the description with reference to FIG. 1 to FIG. 10.

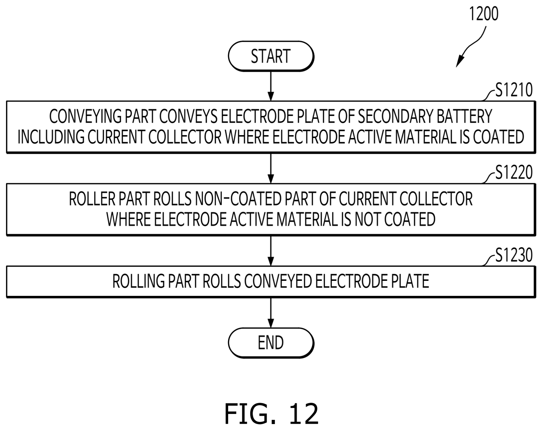

FIG. 12 is a flowchart illustrating an example of an electrode manufacturing method for a secondary battery according to some embodiments of the present disclosure.

Referring to FIG. 12, an electrode manufacturing method 1200 for a secondary battery may be initiated by a conveying part that conveys an electrode plate of a secondary battery including a current collector where an electrode active material is coated (S1210).

Next, the roller part (e.g., the roller part 140 in FIG. 1) may elongate the non-coated part of the current collector where an electrode active material is not coated (S1220). The roller part may include a roller base and an adhesive film that covers a portion of the roller base. Elongating the non-coated part of the current collector may include corresponding (e.g., matching) the location of the adhesive film to the location of the non-coated part. Elongating the non-coated part of the current collector may include detaching the non-coated part from the adhesive film.

Next, the rolling part (e.g., the rolling part 130 in FIG. 1) may roll the conveyed electrode plate (S1230). Elongating the non-coated part of the current collector (S1220) may be performed before rolling the electrode plate (S1230). Rolling the electrode plate (S1230) may include implementing a rolling part with a pair of rolling rollers, such that the electrode plate may pass through the rolling gap formed between the pair of rolling rollers of the rolling part while simultaneously pressurizing (e.g., pressing) the electrode active material layer formed by coating the electrode active material on the current collector and the current collector.

By way of summation and review, the manufacturing process of secondary batteries may be categorized into three (3) stages including an electrode manufacturing process, an electrode assembly manufacturing process, and a formation process. The electrode manufacturing process may be further divided into an electrode slurry mixing process, an electrode coating and drying process, a rolling process, a slitting process, and a winding process.

The electrode slurry mixing process may include a process of mixing an electrode active material, which is an element of an electrode, with other additives such as a conductive material and filler, a binder for inter-powder bonding and adhesion to a current collector, and a solvent for viscosity provision and powder dispersion for mixing components for forming an electrode active layer in which an electrochemical reaction occurs in the electrode to manufacture a slurry having fluidity. Such a mixed composition is referred to as an electrode mixture in a broad sense.

The electrode coating and drying process is a process for applying the electrode mixture onto an electrically conductive current collector and removing a solvent contained in the slurry.

In the rolling process, the electrode mixture and the current collector are bonded using reel pressing, etc., and during the reel press rolling, a state is created in which there may be a difference in elongation due to the stress difference between the coated portion where the electrode mixture exists and the uncoated portion where the electrode mixture does not exist.

The difference in elongation may cause a skew phenomenon in which the electrode plate cut in half in the running direction may be bent when a half-slitting process for cutting an electrode plate in half is performed in the slitting process. The skew phenomenon may increase cell defects in the subsequent electrode winding process or stacking process.

Attempts have been made to use a method of heating a non-coated area by applying induction heating annealing (IHA) to the uncoated area of the electrode and elongating the non-coated area has been used. However, when the output of the IHA is excessively increased for sufficient elongation, the non-coated area or an insulating film may become charred.

In contrast, an electrode manufacturing apparatus for a secondary battery and an electrode manufacturing method for a secondary battery according to some embodiments of the present disclosure effectively and rapidly provide an electrode for a secondary battery with uniform quality by suppressing the skew formed on the electrode plate of the secondary battery without a heating process or a waiting process.

According to example embodiments, an electrode manufacturing apparatus for a secondary battery minimizes the skew caused by the stress difference in a rolling process for manufacturing an electrode, and reduces the defect cells in a winding process or a stack process of an electrode.

According to example embodiments, an electrode manufacturing apparatus for a secondary battery minimizes the damages to a current collector or an electrode active material layer, and the rolling rated difference of the non-coated part.

According to example embodiments, an electrode manufacturing apparatus for a secondary battery and an electrode manufacturing method for a secondary battery suppresses the skew formed on the electrode plate of the secondary battery without a heating process or a waiting process, thereby effectively and rapidly providing a secondary battery electrode with uniform quality.

However, effects of the present disclosure are not limited to the above, and other aspects and features of the present disclosure will be clearly understood by those skilled in the art from the description of the present disclosure above.

Although the present disclosure has been described with reference to some embodiments and drawings illustrating aspects thereof, the present disclosure is not limited thereto. Various modifications and variations can be made by a person skilled in the art to which the present disclosure belongs within the scope of the present disclosure and the claims and their equivalents, below.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. An electrode manufacturing apparatus (100) for a secondary battery, the apparatus (100) comprising:
a conveying part (120) configured to convey an electrode plate (110), the electrode plate (110) including a current collector (112) coated with an electrode active material (116);
a rolling part (130) along the conveying part (120), the rolling part (130) being configured to roll the electrode plate (110); and
a roller part (140) above the conveying part (120), the roller part (140) including a roller base (142) and an adhesive film (144) covering a portion of the roller base (142), and the roller part (140) being configured to roll a non-coated part of the current collector (112).

2. The apparatus as claimed in claim 1, wherein the roller part (140) includes a step difference between the adhesive film (144) and a surface of the roller base (142).

3. The apparatus as claimed in claim 1 or claim 2, wherein:
the non-coated part is on opposite ends of the current collector (212),
the adhesive film (144) includes a first adhesive film (244_1) and a second adhesive film (244_2) on opposite ends of the roller base (242), respectively, and
a separation distance between the first adhesive film (244_1) and the second adhesive film (244_2) corresponds to a width of an electrode active material layer (214) on the current collector (212).

4. The apparatus as claimed in any preceding claim, wherein the roller base (142) is configured to control a tension transmitted from the conveying part (120).

5. The apparatus as claimed in any preceding claim, wherein the rolling part (130) includes a pair of rolling rollers with a rolling gap therebetween, the pair of rolling rollers being configured to press the electrode active material (116) and the current collector (112) passing through the rolling gap.

6. The apparatus as claimed in any preceding claim, wherein the roller part (140) is positioned ahead of the rolling part (130) with respect to a conveying direction of the conveying part (120).

7. The apparatus as claimed in any preceding claim, wherein the roller part (140) and the rolling part (130) are spaced apart from each other along the conveying part (120).

8. An electrode manufacturing method for a secondary battery, the method comprising:
conveying, by a conveying part (120), an electrode plate (110) of the secondary battery, the electrode plate (110) including a current collector (112) coated with an electrode active material (116);
elongating, by a roller part (140), a non-coated part of the current collector (112) where the electrode active material (116) is not coated; and
rolling, by a rolling part (130), the electrode plate (110), the roller part (140) including a roller base (142) and an adhesive film (144) that covers a portion of the roller base (142).

9. The method as claimed in claim 8, wherein elongating the non-coated part of the current collector (112) includes corresponding a location of the adhesive film (144) to a location of the non-coated part.

10. The method as claimed in claim 8 or claim 9, wherein elongating the non-coated part of the current collector (112) includes detaching the non-coated part from the adhesive film (144).

11. The method as claimed in claim 10, wherein detaching the non-coated part from the adhesive film (144) includes elongating the non-coated part detached from the adhesive film (144) in a process of passing through the roller part (140).

12. The method as claimed in any of claims 8 to 11, wherein elongating the non-coated part of the current collector (112) is performed before rolling the electrode plate (110).

13. The method as claimed in any of claims 8 to 12, wherein:
the non-coated part is placed on both ends of the current collector (212),
the adhesive film (244) includes a first adhesive film (244_1) and a second adhesive film (244_2), and
a separation distance between the first adhesive film (244_1) and the second adhesive film (244_2) corresponds to a width of an electrode active material layer (214) formed by coating the electrode active material on the current collector (212).

14. The method as claimed in any of claims 8 to 13, wherein rolling the electrode plate (110) includes controlling a tension transmitted from the conveying part (120) via the roller base (142).

15. The method as claimed in any of claims 8 to 14, wherein rolling the electrode plate (110) includes passing the electrode plate (110) through a rolling gap formed between a pair of rolling rollers, and simultaneously pressurizing the current collector (112) and an electrode active material layer (114) where the electrode active material (116) is coated on the current collector (112).
